# DEMANDE DE BREVET EUROPEEN

(11) **EP 0 575 252 A1**
(43) Date de publication de la demande: **22.12.1993**
(21) Numéro de dépôt: 93401547.0
(22) Date de dépôt: 16.06.1993
(51) Int. Cl.: G01S 7/06

(54) **Dispositif de visualisation d'au moins une image délivrée notamment par un radar**

(30) Priorité: 18.06.1992 FR 9207422
(71) Demandeur: SOPELEM-SOFRETEC, Société dite:, F-95870 Bezons (FR)
(72) Inventeur: Giraudy, Bernard Charles, F-95150 Taverny (FR)
(74) Mandataire: Barnay, André François

(57) **Abrégé**

Ce dispositif de visualisation d'une image délivrée notamment par un radar, sur un écran (1) d'un moniteur de télévision associé à une mémoire vidéographique (2) dont le contenu est contrôlé par des moyens de gestion de l'affichage (3) et recevant l'image à visualiser, est caractérisé en ce que les moyens de gestion comprennent un processeur de rémanence (4) de traitement du contenu de certaines zones de la mémoire vidéographique (2) selon une loi déterminée, pour engendrer un phénomène de pseudo-rémanence de certains points de l'image radar visualisée sur l'écran.

## Description

La présente invention concerne un dispositif de visualisation d'une image délivrée notamment par un radar, sur un écran d'un moniteur de télévision.

Plus particulièrement, cet écran de moniteur de télévision est associé à une mémoire vidéographique dont le contenu est contrôlé par des moyens de gestion de l'affichage, recevant l'image à visualiser.

De façon plus générale, le dispositif de visualisation proposé permet de visualiser sur un écran de télévision standard à balayage en X, Y, c'est-à-dire en coordonnées cartésiennes, des images issues d'un capteur fonctionnant en ρ, ϑ, c'est-à-dire en coordonnées polaires.

Ce capteur est généralement une antenne radar associée à son électronique de commande et dans l'état de la technique, les consoles utilisées pour la visualisation de ces images radar reçoivent directement les différentes informations et en particulier le signal vidéographique de sortie de ce radar.

Cependant, ces consoles sont relativement rudimentaires et la qualité de l'image visualisée n'est pas très bonne.

Par ailleurs, les possibilités d'extension de l'utilisation en particulier de l'imagerie radar, sont également relativement limitées du fait de la structure de ces consoles, et en particulier de l'écran de visualisation et de son électronique de commande.

On connaît également du document EP-A-0 107 595, un procédé et un dispositif de rémanence artificielle et leur application à un transformateur numérique d'image.

Dans ce document, la rémanence est obtenue par traitement du signal provenant du radar, c'est-à-dire en temps réel et l'on conçoit que le phénomène de rémanence artificielle obtenu dépend de la cadence des signaux provenant du radar, c'est-à-dire en fait de la vitesse de balayage de celui-ci.

Le but de l'invention est donc de résoudre ces problèmes en permettant la visualisation de ces images sur un écran de télévision tout en respectant l'ergonomie des consoles classiques et en conservant la qualité de l'imagerie liée à la rémanence des phosphores utilisés dans ces consoles classiques.

A cet effet, l'invention a pour objet un dispositif de visualisation d'une image délivrée notamment par un radar sur un écran d'un moniteur de télévision, associé à une mémoire vidéographique dont le contenu est contrôlé par des moyens de gestion de l'affichage et recevant l'image à visualiser, caractérisé en ce que les moyens de gestion comprennent un processeur de rémanence de traitement du contenu de certaines zones de la mémoire vidéographique selon une loi déterminée, pour engendrer un phénomène de pseudo-rémanence de certains points de l'image radar visualisée sur l'écran.

Avantageusement, des moyens de conversion du standard des informations contenues dans un signal vidéographique délivré par le radar, d'un système de coordonnées polaires en un système de coordonnées cartésiennes, sont interposés entre le radar et les moyens de gestion.

L'invention sera mieux comprise à l'aide de la description qui va suivre, donnée uniquement à titre d'exemple et faite en se référant aux dessins annexés dans lesquels :
- La figure 1 représente un schéma synoptique illustrant le fonctionnement d'un dispositif de visualisation selon l'invention.
- La figure 2 représente l'écran d'un moniteur sur lequel deux images radar sont affichées simultanément.

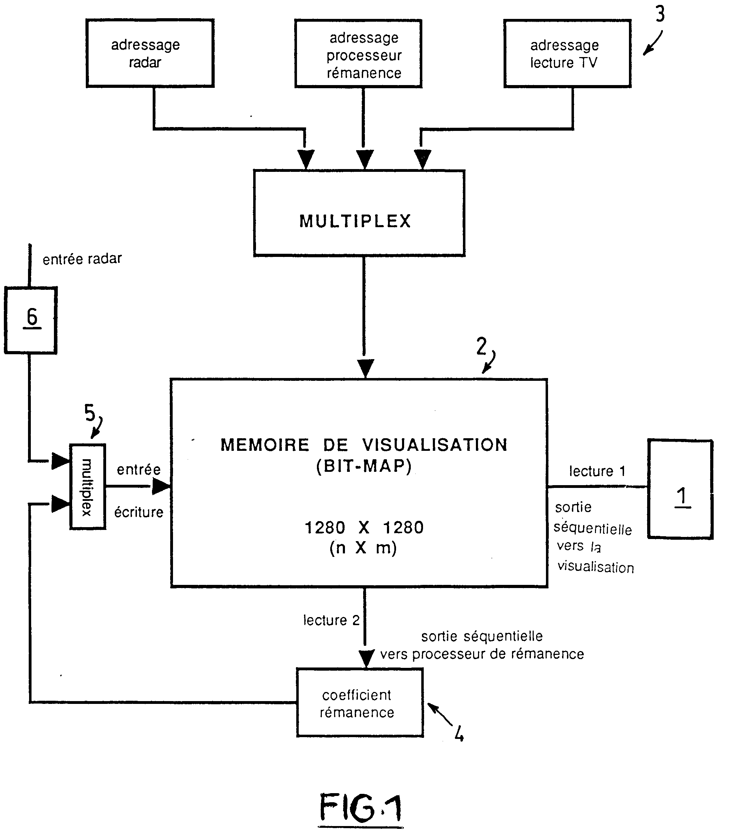

Ainsi qu'on peut le voir sur la figure 1, le dispositif de visualisation selon l'invention permet d'afficher une image délivrée notamment par un radar, sur un écran 1 d'un moniteur de télévision associé à une mémoire vidéographique 2, dont le contenu est contrôlé par des moyens de gestion de l'affichage et recevant l'image à visualiser.

Ces moyens de gestion sont désignés de façon générale par la référence 3 sur cette figure.

Selon l'invention, les moyens de gestion comprennent en outre un processeur de rémanence désigné par la référence générale 4 sur cette figure, ce processeur de rémanence permettant de traiter le contenu de certaines zones de la mémoire vidéographique 2 selon une loi déterminée, pour engendrer un phénomène de pseudo-rémanence de certains points de l'image radar visualisée sur l'écran.

En fait, ce processeur de rémanence a été conçu pour répondre au problème général de la présentation d'une image radar sur un moniteur de télévision en noir et blanc ou en couleurs.

Celui-ci réalise par exemple un effacement progressif du contenu de la mémoire afin de permettre la présentation, à chaque balayage radar, de la situation en temps réel, ainsi que la visualisation classique d'une situation radar intimement liée à la rémanence des phosphores utilisés dans les tubes à rayons cathodiques de consoles radar classiques.

L'observation des phénomènes visuels dus à l'asynchronisme des deux types de balayage, à savoir radar et télévision, ainsi que la physiologie de l'oeil humain, a permis la mise au point d'un algorithme simple et performant permettant un excellent rendu de l'effet de rémanence.

Les accès à cette mémoire vidéographique 2 en repère cartésien s'effectuent selon les différents principes suivants :
- En écriture par l'entrée radar à travers des moyens 5 de multiplexage et des moyens 6 de conversion du standard des informations contenues dans le signal vidéographique émanant du radar, d'un système de coordonnées polaires en un système de coordonnées cartésiennes, de type classique. Ce cycle correspond à un cycle de lecture avec réécriture en mémoire de l'ancienne valeur de celle-ci, si cette valeur est supérieure à l'amplitude de la donnée radar. Dans le cas contraire, on écrit la donnée émanant du radar dans la mémoire.
- En écriture par le processeur de rémanence, ce qui correspond à un cycle de lecture et de réécriture de la donnée avec décroissance selon une loi programmable par fonctions linéaires ou exponentielles.
- En lecture par la sortie TV, ce qui correspond à un cycle de lecture séquentielle des données mémorisées pour présentation de l'image sur l'écran.

On conçoit donc que le dispositif selon l'invention permet par un traitement approprié des informations émanant du radar, en particulier au niveau de la mémoire vidéographique associée à l'écran d'un moniteur de télévision, d'assurer l'affichage sur celui-ci d'images radar tout en conservant la qualité de l'imagerie, liée à la rémanence des phosphores utilisés dans les consoles classiques de type PPI (Panoramic Plot Indicator).

Le fait que cet effet de rémanence soit obtenu de façon pilotée au niveau de la mémoire vidéographique du moniteur, autorise des lois de décroissance quelconques de la luminosité tant sur le plan spatial que temporel pour aller jusqu'à une rémanence infinie pour effectuer le tracé de l'historique des trajectoires de cibles mobiles.

En pratique, cette rémanence peut être établie entre trois secondes et l'infini.

Ce processeur de rémanence peut être réalisé à l'aide de composants discrets ou sous forme programmée.

Enfin, le moniteur de télévision peut être constitué par un moniteur dit à haute définition.

L'invention permet également l'affichage simultané de plusieurs images radar, complètes ou partielles, sur un même moniteur, les radars étant disposés à distance les uns des autres.

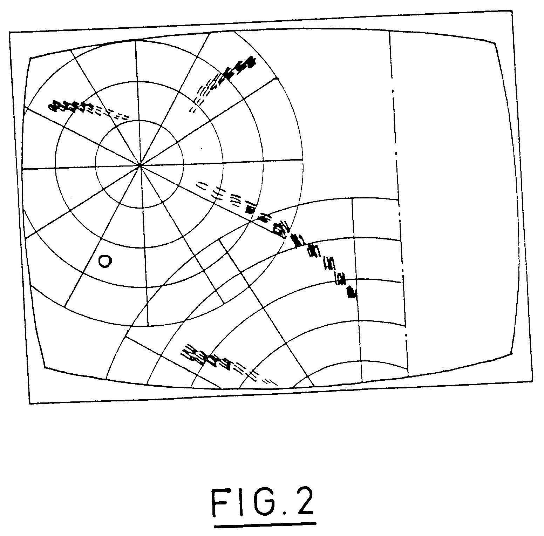

La figure 2 donne un exemple de l'affichage simultané de deux images radar qui permet par exemple de suivre, sans discontinuité, la trajectoire d'un aéronef, ou d'un missile, qui vole successivement dans le champ des deux radars.

Il est possible d'envisager l'affichage simultané de quatre images radar, et ceci à l'aide d'une seule mémoire vidéographique.

## Revendications

1. Dispositif de visualisation d'une image délivrée notamment par un radar sur un écran (1) d'un moniteur de télévision associé à une mémoire vidéographique (2) dont le contenu est contrôlé par des moyens de gestion de l'affichage (3) et recevant une image à visualiser, caractérisé en ce que les moyens de gestion comprennent un processeur de rémanence (4) de traitement du contenu de certaines zones de la mémoire vidéographique (2) selon une loi déterminée, pour engendrer un phénomène de pseudo-rémanence de certains points de l'image radar visualisée sur l'écran.

2. Dispositif selon la revendication 1, caractérisé en ce que des moyens (6) de conversion du standard des informations contenues dans un signal vidéographique émanant du radar, d'un système de coordonnées polaires en un système de coordonnées cartésiennes, sont interposés entre le radar et les moyens de gestion.

3. Dispositif selon la revendication 1, caractérisé en ce que au moins un accès à la mémoire vidéographique s'effectue en écriture par le processeur de rémanence, ce qui correspond à un cycle de lecture et de réécriture de la donnée avec décroissance selon une loi programmable par fonctions linéaires ou exponentielles.
